# EUROPÄISCHE PATENTSCHRIFT

(11) **EP 4 061 971 B1**
(45) Veröffentlichungstag und Bekanntmachung des Hinweises auf die Patenterteilung: **21.08.2024**
(21) Anmeldenummer: 19812726.8
(22) Anmeldetag: 21.11.2019
(51) Int. Cl.: C21D 9/00, F27B 9/38, F27D 5/00, H01M 4/04, H01M 4/1391, H01M 10/0525

(54) **TRANSPORTWANNE ZUM TRANSPORTIEREN UND ERHITZEN CHEMISCHER SUBSTANZEN**
TRANSPORT TRAY FOR CONVEYING AND HEATING CHEMICAL SUBSTANCES
PLATEAU DE TRANSPORT PERMETTANT DE TRANSPORTER ET DE CHAUFFER DES SUBSTANCES CHIMIQUES

(43) Veröffentlichungstag der Anmeldung: 28.09.2022
(73) Patentinhaber: Saint-Gobain IndustrieKeramik Rödental GmbH, 96472 Rödental (DE)
(72) Erfinder: DORST, Hans-Ulrich, 96472 Rödental (DE)
(74) Vertreter: Gebauer, Dieter Edmund
(86) Internationale Anmeldenummer: PCT/EP2019/082089
(87) Internationale Veröffentlichungsnummer: WO 2020/104592

(56) Entgegenhaltungen:
- WO-A1-2012/133525
- CN-A- 105 352 328
- CN-A- 105 841 497
- US-A- 2 182 201
- US-A1- 2015 241 127

## Beschreibung

Die vorliegende Erfindung liegt auf dem technischen Gebiet der thermischen Umsetzung chemischer Substanzen in einem Ofen und betrifft eine Transportwanne, die zum Transportieren und Erhitzen chemischer Substanzen geeignet ist.

Batterien werden grundsätzlich in primäre und sekundäre Energiespeicher unterschieden. Während bei primären Energiespeichern die chemische Energie irreversibel in elektrische Energie umgewandelt wird, ermöglichen sekundäre Energiespeicher (Akkumulatoren) eine Mehrfachnutzung durch die Möglichkeit, die ablaufende chemische Reaktion durch Zufuhr von elektrischer Energie umzukehren. Sekundäre Energiespeicher mit einem aktiven Kathodenmaterial auf Lithium-Ionen-Basis werden in verschiedensten Anwendungsfeldern eingesetzt. Beispiele hierfür sind Elektro- und Hybridfahrzeuge, tragbare Computer, Mobiltelefone und Smart Watches. Durch die breite Verwendung von Lithium-Ionen-Batterien werden aktive Kathodenmaterialien in großer Menge benötigt. Die erzeugten Mengen betragen weltweit mehr als Hunderttausend Tonnen pro Jahr, mit stark steigender Tendenz. Derzeit ist es gängig, als aktives Kathodenmaterial Lithium-Mischmetalloxide mit den Übergangsmetallen Nickel (Nickel), Mangan (Mn) und Cobalt (Co) einzusetzen. Die am meisten produzierten Kathodenmaterialien sind Lithiumnickelcobaltmanganoxid (LiNiCoMnOs) und Lithiumcobaltoxid (LiCoOs); in weniger großen Mengen werden Lithiumnickelcobaltaluminiumoxid (LiNiCoAlO₂) und Lithiumeisenphosphat (LiFePo₄) produziert.

Bei der großtechnischen Herstellung von Kathodenmaterialien für Lithiumlonen-Batterien werden die jeweiligen Ausgangsstoffe in einer Transportwanne durch einen Durchlaufofen transportiert und hierbei auf eine Temperatur von beispielsweise mehrere Hundert Grad Celsius erhitzt, wodurch eine chemische Umsetzung zum gewünschten Produkt erfolgt. Nun hat sich in der Praxis gezeigt, dass die Transportwannen einer erheblichen Korrosion unterliegen. Ursache hierfür ist die chemische Aggressivität der in der Transportwanne transportierten Substanzen, welche bei den hohen Temperaturen im Durchlaufofen das Material der Transportwanne verstärkt angreifen. Vor allem bei der Herstellung von Lithiumnickelcobaltmanganoxid tritt wegen der besonders aggressiven Übergangsmetalle eine sehr starke Korrosion der Transportwannen auf. Dies hat in nachteiliger Weise zur Folge, dass die Transportwannen nur eine relativ geringe Anzahl von Verwendungen erlauben und anschließend ersetzt werden müssen. Beispielsweise kann eine Transportwanne bei der Herstellung von Lithiumnickelcobaltmanganoxid meist nur für 20 bis 40 Produktionszyklen eingesetzt werden. Erschwerend kommt hinzu, dass die Transportwannen nach dem Gebrauch Rückstände des Kathodenpulvers aufweisen, die in aller Regel als Sondermüll einzustufen sind, sodass eine aufwendige und teure Entsorgung erforderlich ist. Einerseits werden hierdurch die Produktionskosten für das aktive Kathodenmaterial in unerwünschter Weise erhöht, andererseits ist der sich durch die zu entsorgenden Transportwannen ergebende Sondermüll in ökologischer Hinsicht unerwünscht. Zudem kontaminieren Materialien der Transportwanne das Kathodenpulver, was zu dessen Verunreinigung führt und insgesamt dessen Qualität vermindert.

CN 105352328 A und CN 105841497 A kann jeweils eine Transportwanne entnommen werden, der der Rahmen und Boden zerstörungsfrei lösbar miteinander verbunden sind. US 2015/241127 A1 zeigt eine Transportwanne gemäß dem Oberbegriff von Patentanspruch 1. Weiterer Stand der Technik kann US 2182201 A entnommen werden.

Demgegenüber besteht die Aufgabe der vorliegenden Erfindung darin, im Stand der Technik bekannte Transportwannen für einen Durchlaufofen so zu verbessern, dass die Kosten für die großtechnische Fertigung chemischer Produkte verringert sind und weniger Sondermüll zu entsorgen ist. Zudem soll eine geringere Kontamination des Kathodenpulvers durch das Wannenmaterial erfolgen.

Diese und weitere Aufgaben werden nach dem Vorschlag der Erfindung durch eine Transportwanne für einen Ofen, insbesondere einen Durchlaufofen oder Herdwagenofen, gemäß den Merkmalen des unabhängigen Patentanspruchs gelöst. Vorteilhafte Ausgestaltungen der Erfindung sind durch die Merkmale der Unteransprüche angegeben.

Erfindungsgemäß ist eine Transportwanne für einen Ofen, insbesondere Durchlaufofen oder Herdwagenofen, gezeigt. Die Transportwanne dient als wannenförmiger Behälter zum Transportieren von chemischen Substanzen, wobei die in der Transportwanne transportierten Substanzen (Ausgangsstoffe) durch Erhitzen im Ofen in der Transportwanne zu einem chemischen Produkt umgesetzt werden sollen. Grundsätzlich können beliebige Ausgangsstoffe in der erfindungsgemäßen Transportwanne zu einem chemischen Produkt umgesetzt werden. Besonders vorteilhaft handelt es sich um Ausgangsstoffe zur Herstellung eines aktiven Kathodenmaterials einer Lithiumlonen-Batterie, welches insbesondere ein Lithium-Mischmetalloxid mit den Übergangsmetallen Nickel (Nickel), Mangan (Mn) und Cobalt (Co) ist, beschrieben durch die allgemeine Formel LiNixMnyCozO2 mit x+y+z = 1. In vorstehender Formel können Nickel, Mangan und Cobalt jeweils allein oder in einer beliebigen Kombination vorhanden sein.

Die Transportwanne umfasst allgemein einen zumindest im Innern der Transportwanne ebenen Boden und einen umlaufenden Rahmen, der gemeinsam mit dem Boden einen wannenförmigen (d.h. nach oben hin offenen) Hohlraum zur Aufnahme von chemischen Substanzen bildet. Hierbei ist der Rahmen mit dem Boden zerstörungsfrei lösbar verbunden. Der Boden ist mit dem Rahmen form- und/oder kraftschlüssig verbunden, wobei der Boden vom Rahmen entfernt werden kann, ohne dass Boden und Rahmen zerstört werden. Der Boden und der umlaufende Rahmen weisen jeweils Flächen auf, welche den wannenförmigen Hohlraum begrenzen, wobei die Bodenfläche zur Auflage der chemischen Substanzen dient.

Wie der Erfinder überraschend festgestellt hat, tritt bei der thermisch induzierten Umsetzung der Ausgangsstoffe in der Transportwanne meist eine stärkere Korrosion am Boden auf als am Rahmen. Ursache hierfür ist ein geringfügiger Schwund der in der Transportwanne transportierten Substanzen, der abhängig von der Temperatur zu einem verringerten oder sogar fehlenden Kontakt mit der innenseitigen Rahmenfläche führt, was eine geringere (Kontakt-)Korrosion mit sich bringt. Die erfindungsgemäße Transportwanne macht sich diese Erkenntnis in vorteilhafter Weise zunutze und ermöglicht aufgrund der lösbaren Befestigung von Boden und Rahmen einen Austausch des gegebenenfalls stärker korrodierten Bodens oder eines Teils des Bodens und eine Weiterverwendung des Rahmens. Zudem kann der vom Rahmen gelöste Boden einer gezielten Reinigung unterzogen werden, beispielsweise durch Sandstrahlen, was möglicherweise ebenfalls eine Weiterverwendung ermöglicht. Hierdurch können Kosten für die Transportwannen eingespart werden, wodurch insgesamt die Kosten für die großtechnische Herstellung eines Produkts, insbesondere des aktiven Kathodenmaterials einer Lithium-Ionen-Batterie, eingespart werden. Zudem wird die Menge des zu entsorgenden Sondermülls verringert.

Um eine zerstörungsfrei lösbare, aber feste Verbindung zwischen Rahmen und Boden zu erreichen, sind Rahmen und Boden miteinander verklemmt oder verschraubt, wobei mindestens ein entsprechendes Verbindungsmittel (Klemmelement, Schraubelement) vorgesehen ist. Bei einer Verschraubung kann es vorteilhaft sein, wenn Schrauben in einem Gewinde mit Spiel aufgenommen sind. Dies kann vorteilhaft im Hinblick auf verschiedene thermische Ausdehnungen von Boden und Rahmen sein, welche durch das Spiel zwischen Schrauben und Gewinde ausgeglichen werden können.

Der Boden der erfindungsgemäßen Transportwanne kann grundsätzlich ein- oder mehrteilig ausgebildet sein. Der Boden kann aus einer einzigen Bodenplatte bestehen, wobei die (einzige) Bodenplatte eine Bodenfläche aufweist, welche den wannenförmigen Hohlraum begrenzt und zur Auflage der chemischen Substanzen dient. Alternativ kann der Boden aus mehreren Bodenplatten bestehen, die (in vertikaler Richtung) übereinanderliegend angeordnet sind. Jede Bodenplatte kann einteilig ausgebildet oder aus mehreren Bodenplattenelementen zusammengesetzt sein. Die oberste Bodenplatte weist eine Bodenfläche auf, welche den wannenförmigen Hohlraum begrenzt und zur Auflage der chemischen Substanzen dient.

Gemäß einer Alternative der erfindungsgemäßen Transportwanne weist der geschlossene Rahmen einen nach außen (in Richtung weg vom Hohlraum der Transportwanne) vorspringenden Klemmflansch auf, wobei der Boden mit dem Klemmflansch des Rahmens durch mindestens ein Klemmelement fest verbunden ist.

Gemäß einer weiteren Alternative der erfindungsgemäßen Transportwanne weist der geschlossene Rahmen an seiner Unterseite einen nach innen (in Richtung hin zum Hohlraum der Transportwanne) vorspringenden Auflageflansch auf, der vorzugsweise umlaufend ausgebildet ist. Besonders bevorzugt ist der Rahmen durch den Auflageflansch hindurch mit dem auf den Auflageflansch aufgelegten Boden durch mindestens ein Schraubelement fest verbunden. Der Auflageflansch ist hier auch ein Schraubflansch, da er zur Verschraubung dient. Besonders bevorzugt endet das mindestens eine Schraubelement, welches den Auflageflansch durchsetzt, blind in einem mit einem Gewinde versehenen Sackloch (d.h. den Boden nicht vollständig durchbrechendes Loch), das im Boden ausgebildet ist.

Gemäß einer weiteren Alternative der erfindungsgemäßen Transportwanne ist der Boden in Form einer einteiligen Bodenplatte ausgebildet, d.h. der Boden besteht aus der einteiligen Bodenplatte. Vorzugsweise ist die einteilige Bodenplatte mit dem Rahmen durch mindestens ein zerstörungsfrei lösbares Verbindungsmittel (z.B. Klemmelement, Schraubelement) fest verbunden. Beispielsweise ist die einteilige Bodenplatte durch mindestens ein Schraubelement mit dem Rahmen fest verbunden, zu welchem Zweck die Bodenplatte vorteilhaft auf den nach innen vorspringenden Auflage- bzw. Schraubflansch aufgelegt ist. Alternativ ist die einteilige Bodenplatte durch mindestens ein Klemmelement mit dem Rahmen fest verbunden, wobei das mindestens eine Klemmelement vorzugsweise am Klemmflansch des Rahmens angreift.

Gemäß einer weiteren Alternative der Erfindung besteht der Boden aus zwei Bodenplatten, die übereinander liegend angeordnet sind, sodass eine obere Bodenplatte auf einer unteren Bodenplatte angeordnet ist. Die obere Bodenplatte setzt sich aus einer Mehrzahl beispielsweise streifenförmiger Bodenplattenelemente zusammen, die untere Bodenplatte ist einteilig ausgebildet. Die streifenförmigen Bodenplattenelemente sind vorzugsweise nebeneinander liegend angeordnet. Hierbei ist die einteilige untere Bodenplatte, sowie gegebenenfalls die obere Bodenplatte, durch mindestens ein Klemmelement mit dem Rahmen fest verbunden, zu welchem Zweck der Rahmen vorteilhaft einen nach außen vorspringenden Klemmflansch aufweist. Eine Verklemmung erfolgt durch mindestens ein Klemmelement, das am Klemmflansch angreift. Ist der Boden korrodiert, können die obere Bodenplatte oder einzelne Bodenplattenelemente, sowie gegebenenfalls auch die untere Bodenplatte, ausgetauscht werden. Gegebenenfalls können einzelne Bodenplattenelemente der oberen Bodenplatte und/oder die einteilige untere Bodenplatte, beispielsweise nach einer Reinigung, weiterverwendet werden.

Gemäß einer weiteren Alternative der Erfindung besteht der Boden aus einer Bodenplatte, die sich aus einer Mehrzahl beispielsweise streifenförmiger Bodenplattenelemente zusammensetzt, die nebeneinander liegend angeordnet sind. Hierbei weist der Rahmen einen nach innenvorspringenden Auflageflansch auf, dem die streifenförmigen Bodenplattenelemente aufliegen. Zudem ist mindestens ein Klemmelement, beispielsweise eine Klemmleiste, vorgesehen, um die streifenförmigen Bodenplattenelemente mit dem Rahmen fest zu verbinden, wobei das Klemmelement mit dem Auflageflansch (Schraubflansch) verschraubt ist. Zu diesem Zweck wird mindestens ein Schraubelement eingesetzt, das den Auflageflansch durchsetzt und in einem mit einem Gewinde versehenen Sackloch endet, das in einem Bodenplattenelement ausgebildet ist. Beispielsweise sind nur die beiden äußersten Bodenplattenelemente verschraubt und die weiter innen liegenden Bodenplattenelemente durch mindestens eine Klemmleiste, vorzugsweise zwei Klemmleisten, geklemmt. Vorteilhaft sind zwei gegenüberliegend angeordnete Klemmleisten. Auch diese Ausgestaltung ermöglicht einen einfachen Austausch der gesamten Bodenplatte oder einzelner Bodenplattenelemente, wobei gegebenenfalls einzelne Bodenplattenelemente weiterverwendbar sind.

In einer beispielhaften Ausgestaltung der Transportwanne weist der Rahmen eine Rechteck- oder Quadratform mit jeweils zwei einander gegenüberliegenden (parallelen) Rahmenabschnitten auf. Vorteilhaft sind angrenzende Rahmenabschnitte durcheinen schrägen Eck(rahmen)abschnitt miteinander verbunden, wobei der Eckabschnitt zu jedem der beiden angrenzenden Rahmenabschnitte in einem Winkel von größer als 0° und kleiner als 90 angeordnet ist. Für eine Verklemmung von Rahmen und Boden ist es vorteilhaft, wenn der Rahmen an jedem Eckabschnitt über einen separaten Klemmflansch verfügt, wobei der Eckabschnitt beispielsweise relativ zu den Rahmenabschnitten nach innen versetzt sein kann.

Für eine Verklemmung von Rahmen und Boden ist es generell vorteilhaft, wenn der Rahmen einen oder mehrere Klemmflansche aufweist. Die Klemmflansche können zur Anlage eines separaten Klemmelements dienen. Möglich ist jedoch auch, dass ein gemeinsames Klemmelement für alle Klemmflansche vorgesehen ist.

Vorteilhaft ist der Rahmen mit dem Boden verschraubt, d.h. Rahmen und Boden sind durch mindestens eine Schraubverbindung fest miteinander verbunden. Wie die Klemmverbindung ist die Schraubverbindung einerseits eine dauerhaft feste Verbindung, ermöglicht andererseits aber, dass Boden und Rahmen schnell und einfach zerstörungsfrei voneinander gelöst werden können. Vorteilhaft weist der Rahmen zu diesem Zweck mindestens einen Schraubflansch auf, der so ausgebildet ist, dass der Boden als Einlegeteil durch den Rahmen hindurch auf den Schraubflansch aufgelegt werden kann. Vorzugsweise sind für eine Schraubverbindung von Rahmen und Boden unterhalb des Hohlraums ein oder mehrere Sacklöcher ausgebildet, welche den Boden nicht durchbrechen. Die Sacklöcher sind jeweils mit einem Gewinde zum Eingriff einer Befestigungsschraube versehen sein. Möglich ist, jeweils eine Gewindehülse in ein Sackloch einzufügen. Durch Sacklöcher kann in vorteilhafter Weise eine Beschädigung der Bodenfläche des Hohlraums vermieden werden. Zudem sind die Schrauben sicher vor Korrosion geschützt. Zudem ist eine einfache Reinigung der (planen) innenseitigen Bodenfläche, beispielsweise durch Sandstrahlen, möglich.

Typischerweise ist die Transportwanne aus einem feuerfesten Material hergestellt. Vorzugsweise bestehen Rahmen und Boden aus einem keramischen Material, welches vorzugsweise aus der Gruppe Cordierit, Mullit, Alumina, SiC, oder deren Mischungen gewählt ist. Üblich sind Aluminiumoxid-/Cordierit-/Spinell-Mischungen. Vorzugsweise bestehen Rahmen und Boden aus einem SiC-Werkstoff, wie Si-SiC, insbesondere aus einem porösen SiC-Werkstoff, wie N-SiC und R-SiC, vorzugsweise aus Siliziumnitrid, Siliziumoxinitrid, oder deren Mischungen. Aufgrund der designbedingt verbesserten Temperaturwechselbeständigkeit gegenüber herkömmlichen "starren" Transportwannen können Rahmen und/oder Boden auch aus Al2O3-reichen Materialien bestehen.

Die zerstörungfrei lösbare Verbindung zwischen Boden und Rahmen ermöglicht in vorteilhafter Weise auch deren Fertigung aus verschiedenen Materialien. Bei der erfindungsgemäßen Transportwanne bestehen Boden und Rahmen aus voneinander verschiedenen Materialien, welche so gewählt sind, dass das Material des Bodens, bezogen auf die chemische Umsetzung zu einem selben Produkt, korrosionsstabiler ist als das Material des Rahmens. Die Transportwanne kann hierdurch häufiger verwendet werden, d.h. die Zahl der Produktionszyklen bis zum korrosionsbedingten Austausch wird vergrößert. Insbesondere kann das Material des Bodens gezielt im Hinblick auf die Korrosionsstabilität bei der Umsetzung bestimmter Ausgangsmaterialien zu einem chemischen Produkt ausgewählt werden, wodurch die Zyklenzahl erhöht wird. Falls das korrosionsstabilere Material des Bodens teurer ist, betreffen die vermehrten Kosten lediglich den Boden und nicht den Rahmen, so dass, verglichen mit der kompletten Fertigung der Transportwanne aus dem teureren Material, die Kosten für die Transportwanne geringer sind. Möglich ist jedoch auch, dass Boden und Rahmen der erfindungsgemäßen Transportwanne aus einem gleichen Material bestehen. Eine Kosteneinsparung bei der großtechnischen Herstellung eines chemischen Produkts kann schon dadurch erreicht werden, dass nur der stärker korrodierte Boden oder Teile des Bodens ausgewechselt und der Rahmen weiterverwendet wird.

Gemäß einer vorteilhaften Ausgestaltung der Erfindung besteht der Boden (und gegebenenfalls auch der Rahmen) aus einem im Hinblick auf die Herstellung von aktiven Kathodenmaterialien auf Basis von Lithium-Ionen besonders korrosionsstabilen Material, welches vorzugsweise aus der Gruppe, bestehend aus Aluminiumoxid, Zirkonoxid, Magnesiumoxid, R-SiC, N-SiC, S-SiC und Si-SiC, oder deren Mischungen, gewählt ist. Der Rahmen (und gegebenenfalls auch der Boden) besteht vorzugsweise aus Aluminiumoxid, R-SiC, N-SiC, S-SiC oder Si-SiC, oder einer weniger korrosionsstabilen, jedoch kostengünstigeren Material wie SiC (oxidisch oder nitridgebunden), Cordierit oder Cordierit-/Spinell-/Mullit-Mischung.

Besonders vorteilhaft wird die Transportwanne bei der Herstellung eines (Lithium-Ionen-basierten) aktiven Kathodenmaterials einer Lithium-Ionen-Batterie eingesetzt. Die verschiedenen Ausgestaltungen der Erfindung können einzeln oder in beliebigen Kombinationen realisiert sein.

Die Erfindung wird nun anhand von Ausführungsbeispielen näher erläutert, wobei Bezug auf die beigefügten Zeichnungen genommen wird. Es zeigen in vereinfachter, nicht maßstäblicher Darstellung:
Fig. 1A-1B verschiedene Ansichten eines Ausführungsbeispiels der erfindungsgemäßen Transportwanne;
Fig. 2A-2D verschiedene Ansichten eines weiteren Ausführungsbeispiels der erfindungsgemäßen Transportwanne;
Fig. 3A-3D verschiedene Ansichten eines weiteren Ausführungsbeispiels der erfindungsgemäßen Transportwanne;
Fig. 4A-4D verschiedene Ansichten eines weiteren Ausführungsbeispiels der erfindungsgemäßen Transportwanne.

### Ausführliche Beschreibung der Zeichnungen

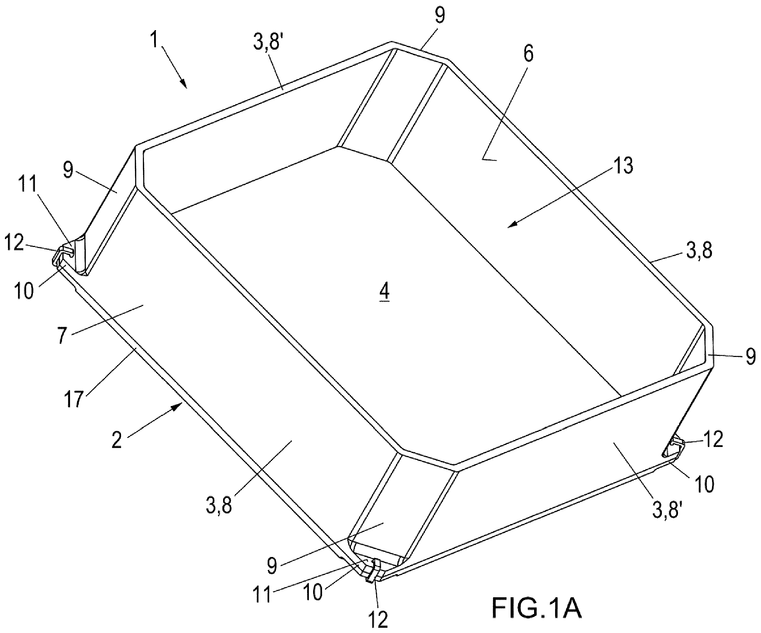

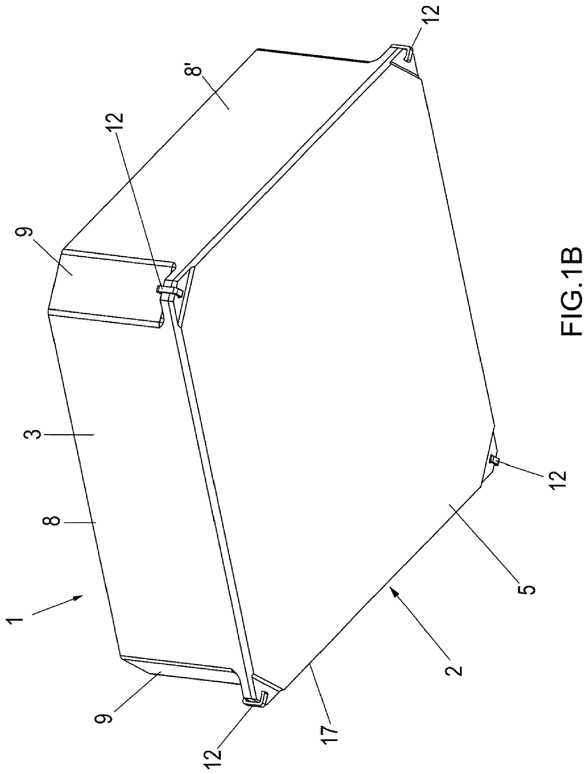

Es wird zunächst Bezug auf die Figuren 1A und 1B genommen. In Figur 1A ist eine insgesamt mit der Bezugszahl 1 bezeichnete Transportwanne gemäß einem ersten Ausführungsbeispiel der Erfindung in einer perspektivischen Ansicht von oben gezeigt. Figur 1B zeigt die Transportwanne 1 in einer perspektivischen Ansicht von unten. Die Transportwanne 1 dient für den Transport und die Erhitzung chemischer Substanzen hier beispielsweise in einem Durchlaufofen. Typischerweise umfasst ein Durchlaufofen ein Rollenbett mit aktiv angetriebenen Rollen, die gemeinsam eine Transportfläche für die Auflage und den Transport der Transportwanne von einem Ofeneingang zu einem Ofenausgang bilden. Da der konkrete Aufbau eines Durchlaufofens für das Verständnis der Erfindung nicht erforderlich ist, erübrigt sich dessen Beschreibung.

Die Transportwanne 1 umfasst einen Boden 2, der hier aus einer ebenen, einteiligen Bodenplatte 17 besteht. Die Bodenplatte 17 weist eine vorderseitige (obere) Bodenfläche 4 und eine rückseitige (untere) Bodenfläche 5 auf. Auf die vorderseitige Bodenfläche 4 ist ein umlaufender, geschlossener Rahmen 3 aufgesetzt. Der Rahmen 3 hat im Wesentlichen Rechteckform und umfasst jeweils zwei einander gegenüberliegende (parallele) Rahmenabschnitte 8 bzw. 8', die durch schräge Eckabschnitte 9 miteinander verbunden sind. Die Eckabschnitte 9 sind zu den Ecken des Bodens 2 jeweils nach innen zurückversetzt. Der Rahmen 3 kann ein- oder mehrteilig ausgebildet sein. Beispielsweise sind die Rahmenabschnitte 8, 8' durch die Eckabschnitte 9 lösbar oder nicht lösbar miteinander verbunden.

Der Rahmen 3 weist eine innenseitige Rahmenfläche 6 und eine außenseitige Rahmenfläche 7 auf. Die vorderseitige Bodenfläche 4 und die innenseitige Rahmenfläche 6 begrenzen gemeinsam einen nach oben hin offenen, wannenförmigen Hohlraum 13, der zur Aufnahme von Ausgangsstoffen dient, welche durch Erhitzung im Durchlaufofen zu einem chemischen Produkt umgesetzt werden sollen. Die Transportwanne 1 wird zu diesem Zweck auf der rückseitigen Bodenfläche 5 durch einen Durchlaufofen transportiert.

Der Rahmen 3 ist mit der Bodenplatte 17 lösbar, aber fest verbunden. Zu diesem Zweck weist der Rahmen 3 an den nach innen versetzten Eckabschnitten 9 jeweils einen Klemmflansch 10 auf. Die Klemmflansche 10 springen jeweils von den Eckabschnitten 9 nach außen vor. Jeder Klemmflansch 10 verfügt über eine oberseitige Klemmfläche 11, die von der rückseitigen Bodenfläche 5 abgewandt ist. Eine als Klemmelement dienende, federelastische Klammer 12 aus keramischem Material ist zwischen der Klemmfläche 11 und der rückseitigen Bodenfläche 5 verspannt, so dass die Bodenplatte 17 und der Rahmen 3 durch die federelastische Kraft der Klammer 12 verpresst werden. Hierdurch wird eine dauerhaft feste Verbindung zwischen Bodenplatte 17 und Rahmen 3 erreicht. Die Klammern 12 haben hier beispielsweise eine U-Form und können in einfacher Weise aufgesteckt bzw. entfernt werden, um den Rahmen 3 und die Bodenplatte 17 fest miteinander zu verbinden oder zu lösen. Die Klammern sind typischer Weise mit einer Einrichtung (Nase) versehen, so dass sie dauerhaft in einem arretierten Zustand verbleiben, was nicht näher dargestellt ist. Eine Klemmung an den vier Eckabschnitten 9 sorgt für eine dauerhaft sichere Verbindung von Rahmen 3 und Bodenplatte 17.

Der Rahmen 3 und die Bodenplatte 17 können aus voneinander verschiedenen Materialien bestehen, wobei die Bodenplatte 17 vorteilhaft aus einem Material besteht, das, bezogen auf die chemische Umsetzung desselben Produkts, korrosionsstabiler ist als das Material des Rahmens 3. Beispielsweise besteht die Bodenplatte 17 aus einem Material, welches aus der Gruppe, bestehend aus Aluminiumoxid, Zirkonoxid, Magnesiumoxid, R-SiC, N-SiC, S-SiC und Si-SiC, oder deren Mischungen, gewählt ist. Der Rahmen 3 besteht beispielsweise aus Cordierit oder einer Cordierit-/Spinell-/Mullit-Mischung. Möglich ist jedoch auch, dass Rahmen 3 und Boden 2 aus einem gleichen Material bestehen.

Vorteilhaft dient die Transportwanne 1 zur Herstellung eines aktiven Kathodenmaterials einer Lithium-Ionen-Batterie, insbesondere ein Lithium-Mischmetalloxid mit den Übergangsmetallen Nickel (Nickel), Mangan (Mn) und Cobalt (Co), beschrieben durch die allgemeine Formel LiNixMnyCozO2 mit x+y+z = 1. Denkbar wäre aber auch, die Transportwanne 1 für die Herstellung anderer Substanzen einzusetzen, beispielsweise Farbpigmente.

Neben der Möglichkeit Rahmen 3 und Bodenplatte 17 wahlfrei aus gleichen oder verschiedenen Materialien zu fertigen, ermöglicht deren lösbare Montage auch einen einfachen Austausch der typischerweise stärker korrodierten Bodenplatte 17. So kann die Bodenplatte 17 in einfacher Weise durch Abziehen der Klammern 12 vom Rahmen 3 gelöst und ausgetauscht werden, wobei der Rahmen 3 mit einer neuen Bodenplatte 17 weiterverwendet werden kann. Hierdurch können Kosten und Material eingespart werden. Gleichermaßen ist eine einfache Reinigung der vorderseitigen Bodenfläche 4 beispielsweise durch Sandstrahlen möglich.

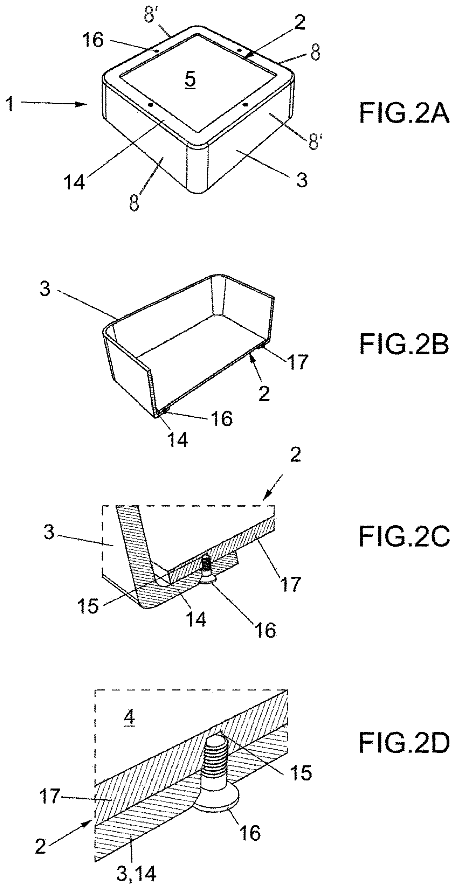

Es wird nun Bezug auf die Figuren 2A bis 2D genommen, worin anhand verschiedener Ansichten ein weiteres Ausführungsbeispiel der erfindungsgemäßen Transportwanne 1 veranschaulicht ist. Um unnötige Wiederholungen zu vermeiden, werden lediglich die Unterschiede zum ersten Ausführungsbeispiel erläutert und ansonsten wird auf obige Ausführungen Bezug genommen.

Sei zunächst Figur 2A betrachtet, worin die Rückseite der Transportwanne 1 in einer perspektivischen Ansicht gezeigt ist. Demnach weist der Rahmen 3 auf seiner Unterseite einen umlaufenden Schraubflansch 14 auf, der nach innen hin vorspringt. Wie in Figur 2B, einer perspektivischen Ansicht von schräg oben der Transportwanne 1, dargestellt, ist der Boden 2, der in Form einer einteiligen Bodenplatte 17 ausgebildet ist, mit seiner rückseitigen Bodenfläche 5 in Form eines Einlegeteils auf den Schraubflansch 14 von oben her aufgesetzt. Eine feste Verbindung von Rahmen 3 und Bodenplatte 17 erfolgt durch jeweilige Schraubverbindungen am Rahmen 3.

Die Schraubverbindung ist in Figur 2C und Figur 2D in jeweiligen Schnittansichten vergrößert gezeigt. Demnach ist für jeden Rahmenabschnitt 8, 8' von unten her ein blind endendes Sackloch 15 gebohrt, welches den Schraubflansch 14 durchquert, jedoch die Bodenplatte 17 nicht durchbricht, so dass die vorderseitige Bodenfläche 4 unbeschädigt bleibt. Das Sackloch 15 ist mit einem nicht näher dargestellten Schraubengewinde versehen, das mit einer Schraube 16 verschraubt ist. Das Schraubengewinde kann in das Sackloch 15 eingedreht sein. Alternativ kann eine Gewindehülse in das Sackloch 15 eingesetzt sein. Durch Einschrauben oder Lösen der Schrauben 16 können der Rahmen 3 und die Bodenplatte 17 in einfacher Weise fest miteinander verbunden bzw. gelöst werden. Vorzugsweise sind die Schrauben 16 mit Spiel im Gewinde aufgenommen, so dass durch das Spiel verschiedene Wärmeausdehnungen von Bodenplatte 17 und Rahmen 3 aufgenommen werden können. Dies ermöglicht auch die Verwendung von Materialien, deren thermischer Ausdehnungskoeffizient sich deutlich unterscheidet.

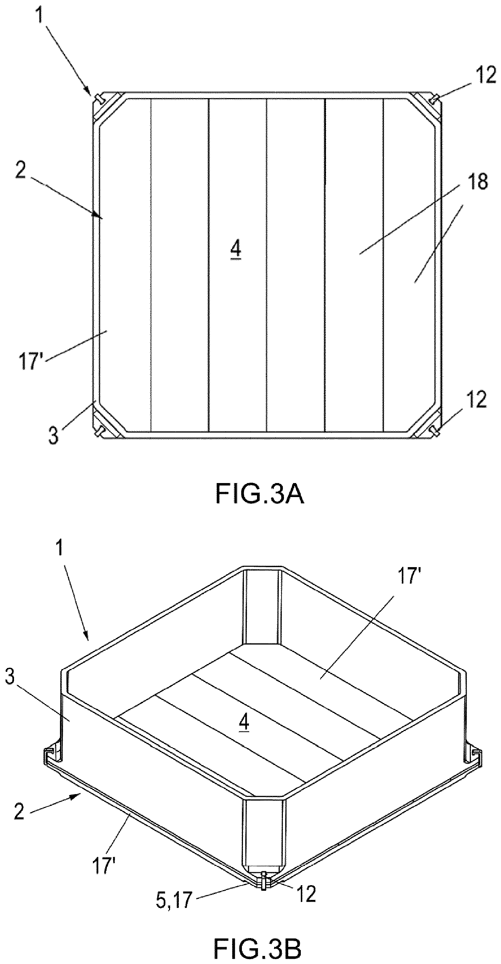

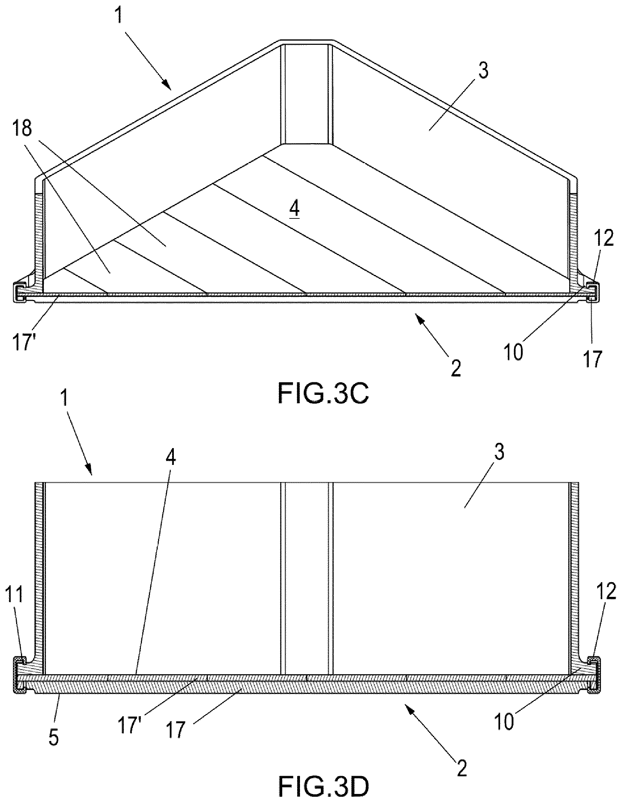

Es wird nun Bezug auf die Figuren 3A bis 3D genommen, worin anhand verschiedener Ansichten ein weiteres Ausführungsbeispiel der erfindungsgemäßen Transportwanne 1 veranschaulicht ist. Um unnötige Wiederholungen zu vermeiden, werden lediglich die Unterschiede zum ersten Ausführungsbeispiel erläutert und ansonsten wird auf obige Ausführungen Bezug genommen. Figur 3A und 3B zeigen die Oberseite der Transportwanne 1 in einer Ansicht von oben sowie einer perspektivischen Ansicht, Figur 3C und Figur 3D zeigen jeweils Schnittansichten.

Bei dieser Ausgestaltung besteht der Boden 2 aus einer einteiligen unteren Bodenplatte 17 und einer hierauf angeordneten mehrteiligen oberen Bodenplatte 17'. Die obere Bodenplatte 17' ist aus einer Mehrzahl streifenförmiger Bodenplattenelemente 18 zusammengesetzt, welche lose nebeneinander angeordnet sind. Die obere Bodenplatte 17' ist spaltfrei, d.h. die streifenförmigen Bodenplattenelemente 18 liegen einander ohne Zwischenfugen an. Die vorderseitige Bodenfläche 4 wird von der oberen Bodenplatte 17' gebildet. Beide Bodenplatten 17, 17' sind mit dem Rahmen 3 verklemmt, zu welchem Zweck Klammern 12 jeweils die oberseitige Klemmfläche 11 und die von der unteren Bodenplatte 17 gebildete rückseitige Bodenfläche 5 verklemmen. Die beiden Bodenplatten 17, 17' sind aus verschiedenen Materialien hergestellt. Die obere Bodenplatte 17' besteht vorteilhaft aus einem Material, das, bezogen auf die chemische Umsetzung desselben Produkts, korrosionsstabiler ist als das Material der unteren Bodenplatte 17, wodurch Kosten eingespart werden können. Die Mehrteiligkeit der oberen Bodenplatte 17 ermöglicht in einfacher Weise den Austausch einzelner Bodenplattenelemente 18. Gleichermaßen können die obere Bodenplatte 17' oder die untere Bodenplatte 17 separat ausgewechselt werden. Die Mehrteiligkeit (Streifen) erhöht designbedingt die Temperaturwechselbeständigkeit der Bodenplatte 17' und erlaubt den Einsatz von dichten korrosionsbeständigeren Materialien, die bei Ausführung als Vollplatte der Temperaturwechselbelastung nicht standhalten würden.

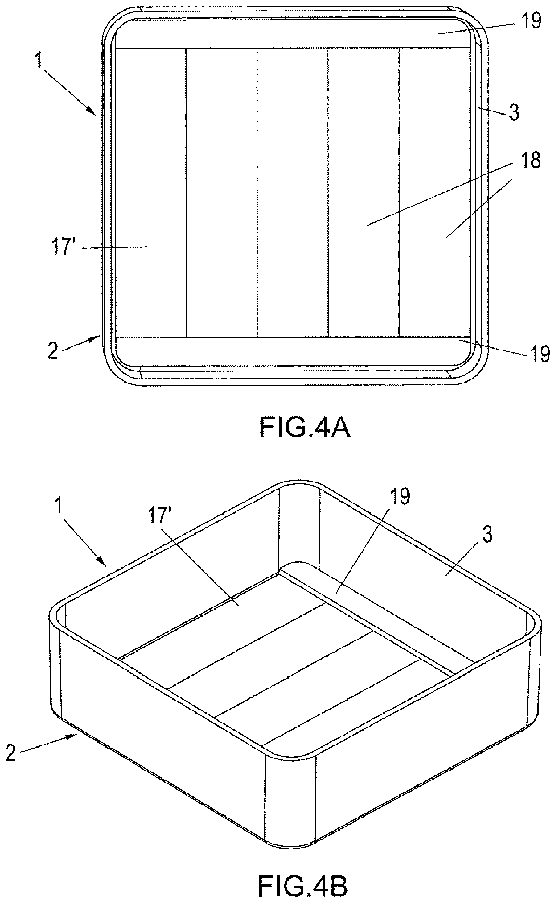

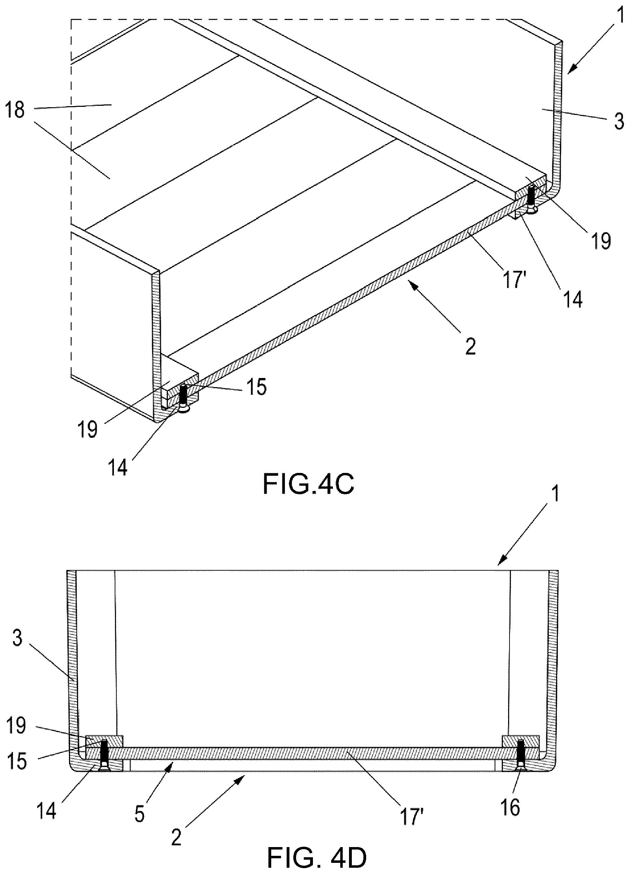

Es wird nun Bezug auf die Figuren 4A bis 4D genommen, worin anhand verschiedener perspektivischer Ansichten ein viertes Ausführungsbeispiel der erfindungsgemäßen Transportwanne 1 veranschaulicht ist. Um unnötige Wiederholungen zu vermeiden, werden lediglich die Unterschiede zum zweiten Ausführungsbeispiel erläutert und ansonsten wird auf obige Ausführungen Bezug genommen. Figur 4A und 4B zeigen die Oberseite der Transportwanne 1 in einer Ansicht von oben sowie einer perspektivischen Ansicht, Figur 4C und Figur 4D zeigen jeweils Schnittansichten.

Demnach weist der Rahmen 3 einen umlaufenden Schraubflansch 14 auf, der nach innen hin vorspringt. Der Boden 2, der aus einer mehrteiligen Bodenplatte 17' besteht, ist mit seiner rückseitigen Bodenfläche 5 in Form eines Einlegeteils auf den Schraubflansch 14 von oben her aufgesetzt. Die Bodenplatte 17' ist aus einer Mehrzahl streifenförmiger Bodenplattenelemente 18 zusammengesetzt, welche lose nebeneinander liegend angeordnet sind. Die Bodenplatte 17' ist spaltfrei, d.h. die streifenförmigen Bodenplattenelemente 18 liegen einander ohne Zwischenfugen an. Eine feste Verbindung von Rahmen 3 und Bodenplatte 17' erfolgt durch Schraubverbindungen, zu welchem Zweck von unten her blind endende Sacklöcher 15 in Klemmleisten 19 gebohrt sind. Schrauben 16 durchqueren den Schraubflansch 14 und die Bodenplatte 17' und münden in die Klemmleisten 19. Eine feste Verbindung der beiden äußersten Bodenplattenelemente 18 mit dem Rahmen erfolgt durch die Verschraubung. Die Bodenplattenplattenelemente 18 werden durch die Klemmleisten 19 gegen den Schraubflansch 14 geklemmt. In der gezeigten Ausführungsform weist die Transportwanne 1 zwei parallele Klemmleisten 19 auf, die einander gegenüberliegen. Die Mehrteiligkeit der Bodenplatte 17' ermöglicht wiederum in einfacher Weise den Austausch einzelner Bodenplattenelemente 18 oder der gesamten Bodenplatte 17'. Vorzugsweise sind die Schrauben 16 mit Spiel im Gewinde aufgenommen, so dass durch das Spiel verschiedene Wärmeausdehnungen der Bodenplattenelemente 18 und Rahmen 3 aufgenommen werden können. Dies ermöglicht auch die Verwendung von Materialien, deren thermischer Ausdehnungskoeffizient sich deutlich unterscheidet.

Aus obigen Ausführungen ergibt sich, dass die Erfindung eine verbesserte Transportwanne für den Transport und die Erhitzung chemischer Substanzen zur Verfügung stellt. Die lösbare, aber feste Verbindung von Rahmen und Boden ermöglicht einen einfachen Austausch und Reinigung des in aller Regel stärker korrodierten Bodens oder Teile hiervon. Zudem können Rahmen und Boden aus verschiedenen Materialien hergestellt sein. Durch die insgesamt geringeren Kosten für die Transportwannen können die Kosten für die großtechnische Herstellung chemischer Produkte vermindert werden. Dies gilt insbesondere für die Herstellung von aktiven Kathodenmaterialien für Lithium-Ionen-Batterien. Gleichermaßen kann der durch die korrosionsbeschädigten Transportwannen anfallende Sondermüll verringert werden. Zudem kann die Qualität des Kathodenmaterials verbessert werden.

### Bezugszeichenliste

1 Transportwanne
2 Boden
3 Rahmen
4 vorderseitige Bodenfläche
5 rückseitige Bodenfläche
6 innenseitige Rahmenfläche
7 außenseitige Rahmenfläche
8, 8' Rahmenabschnitt
9 Eckabschnitt
10 Klemmflansch
11 Klemmfläche
12 Klammer
13 Hohlraum
14 Schraubflansch
15 Sackloch
16 Schraube
17, 17' Bodenplatte
18 Bodenplattenelement
19 Klemmleiste

## Patentansprüche

1. Transportwanne (1) zum Transportieren und Erhitzen chemischer Substanzen zur Herstellung eines Kathodenmaterials für eine Lithium-Ionenbatterie, welche umfasst:
- einen ebenen Boden (2),
- einen umlaufenden Rahmen (3), der gemeinsam mit dem Boden (2) einen wannenförmigen Hohlraum (1) zur Aufnahme der chemischen Substanzen bildet, wobei der Rahmen (3) mit dem Boden (2) zerstörungsfrei lösbar verbunden ist, wobei der Boden (2) und der Rahmen (3) aus voneinander verschiedenen Materialien bestehen, wobei das Material des Bodens (2), bezogen auf die chemische Umsetzung eines selben Produkts, korrosionsstabiler ist als das Material des Rahmens (3), **dadurch gekennzeichnet, dass**
i) der Boden (2) in Form einer einteiligen Bodenplatte (17) ausgebildet ist, wobei die einteilige Bodenplatte (17) mit dem Rahmen (3) verklemmt ist, wobei mindestens ein Klemmelement (12) an einem nach außen vorspringenden Klemmflansch (10) des Rahmens (3) angreift, oder
ii) der Boden (2) in Form einer einteiligen Bodenplatte (17) ausgebildet ist, wobei die einteilige Bodenplatte (17) mit dem Rahmen (3) verschraubt ist, wobei die Bodenplatte (17) einem nach innen vorspringenden Schraubflansch (14) des Rahmens (3) aufliegt und mindestens eine Schraube (16) mit dem Schraubflansch verschraubt ist, wobei die Schraube (16) insbesondere in ein Sackloch (15) der Bodenplatte (17) greift, oder
iii) der Boden (2) mehrteilig ausgebildet ist, wobei der Boden (2) eine obere Bodenplatte (17') aufweist, die aus mehreren beispielsweise streifenförmigen Bodenplattenelementen (18) gebildet ist, wobei die obere Bodenplatte (17') auf einer einteiligen unteren Bodenplatte (17) angeordnet ist, und wobei die einteilige untere Bodenplatte (17), sowie gegebenenfalls die aus einer Mehrzahl Bodenplattenelementen (18) gebildete obere Bodenplatte (17'), mit dem Rahmen (3) verklemmt ist, wobei mindestens ein Klemmelement (12) an einem nach außen vorspringenden Klemmflansch (10) des Rahmens (3) angreift, oder
iv) der Boden (2) mehrteilig ausgebildet ist, wobei der Boden (2) aus einer durch eine Mehrzahl streifenförmiger Bodenplattenelemente (18) gebildeten Bodenplatte (17') besteht, wobei die aus einer Mehrzahl Bodenplattenelemente (18) gebildete Bodenplatte (17') mit dem Rahmen (3) verklemmt ist durch mindestens eine Klemmleiste (19), wobei die Bodenplattenelemente (18) einem Schraubflansch (14) des Rahmens (3) aufliegen, wobei die mindestens einem Klemmleiste (19) durch mindestens eine Schraube (16) mit dem Schraubflansch (14) verschraubt ist, wobei die mindestens eine Schraube (16) in ein Sackloch (15) der mindestens einen Klemmleiste (19) greift.

2. Transportwanne (1) nach Anspruch 1, bei welcher der Boden (2) aus einem Material besteht, welches aus der Gruppe, bestehend aus Cordierit, Mullit, Aluminiumoxid, Zirkonoxid, Magnesiumoxid, R-SiC, N-SiC, S-SiC und Si-SiC, oder deren Mischungen, gewählt ist und bei welcher der Rahmen (3) aus einer Cordierit-/Spinell-/Mullit-Mischung besteht

3. Transportwanne (1) nach einem der Ansprüche 1 oder 2, bei welcher der Rahmen (3) aus mehreren Einzelteilen zusammengesetzt ist.

## Claims

1. Transport trough (1) for transporting and heating of chemical substances for the production of a cathode material for a lithium-ion battery, which comprises:
- a flat bottom (2),
- a circumferential frame (3), which together with the bottom (2) forms a trough-shaped cavity (1) for receiving the chemical substances, wherein the frame (3) is connected to the bottom (2) in a non-destructively detachable manner, wherein the bottom (2) and the frame (3) are made of materials different from one another, wherein the material of the bottom (2) is more corrosion resistant than the material of the frame (3) with respect to the chemical conversion of a same product, **characterized in that**
i) the bottom (2) is formed in the form of a one-piece bottom plate (17), wherein the one-piece bottom plate (17) is clamped to the frame (3), wherein at least one clamping element (12) engages an outwardly protruding clamping flange (10) of the frame (3), or
ii) the bottom (2) is formed in the form of a one-piece bottom plate (17), wherein the one-piece bottom plate (17) is screwed to the frame (3), wherein the bottom plate (17) rests on an inwardly protruding screw flange (14) of the frame (3) and at least one screw (16) is screwed to the screw flange, wherein the screw (16) in particular engages in a blind hole (15) of the bottom plate (17), or
iii) the bottom (2) is formed multi-part, wherein the bottom (2) has an upper bottom plate (17'), which is formed of a plurality of, for example, strip-shaped bottom plate elements (18), wherein the upper bottom plate (17') is arranged on a one-piece lower bottom plate (17), wherein the one-piece bottom plate (17), and optionally the upper bottom plate (17') formed from a plurality of bottom plate elements (18), is clamped to the frame (3), wherein at least one clamping element (12) engages an outwardly protruding clamping flange (10) of the frame (3), or
iv) the bottom (2) is formed multi-part, wherein the bottom (2) consists of a bottom plate (17') formed from a plurality of, for example, strip-shaped bottom plate elements (18), wherein the bottom plate (17') formed by a plurality of bottom plate elements (18) is clamped to the frame (3), for example, by at least one clamping strip (19), wherein the bottom plate elements (18) rest on a screw flange (14) of the frame (3), wherein the at least one clamping strip (19) is screwed to the screw flange (14) by at least one screw (16), wherein the at least one screw (16) engages in particular a blind hole (15) of the at least one clamping strip (19).

2. Transport trough (1) according to claim 1, in which the bottom (2) consists of a material selected from the group consisting of cordierite, mullite, aluminum oxide, zirconium oxide, magnesium oxide, R-SiC, N-SiC, S-SiC and Si-SiC, or mixtures thereof and in which the frame (3) is made of a cordierite/spinel/mullite mixture.

3. Transport trough (1) according to any one of claims 1 or 2, in which the frame (3) is composed of a plurality of individual parts.

## Revendications

1. Bac de transport (1) pour le transport et le chauffage de substances chimiques pour la production d'un matériau de cathode pour une batterie lithium-ion, qui comprend:
- un fond plat (2),
- un cadre périphérique (3) qui forme avec le fond (2) une cavité en forme d'auge (1) pour recevoir les substances chimiques, dans lequel le cadre (3) est relié au fond (2) de manière non destructive, dans lequel le fond (2) et le cadre (3) sont constitués de matériaux différents l'un de l'autre, dans lequel le matériau du fond (2) est plus résistant à la corrosion que le matériau du cadre (3) en ce qui concerne la transformation chimique d'un même produit, **caractérisé par le fait que**
i) le fond (2) est formé sous la forme d'une plaque de fond monobloc (17), dans laquelle la plaque de fond monobloc (17) est fixée au cadre (3), dans lequel au moins un élément de fixation (12) s'engage dans une bride de fixation (10) faisant saillie vers l'extérieur du cadre (3), ou
ii) le fond (2) est formé sous la forme d'une plaque de fond monobloc (17), dans laquelle la plaque de fond monobloc (17) est vissée au cadre (3), dans laquelle la plaque de fond (17) repose sur une bride de vis (14) faisant saillie vers l'intérieur du cadre (3) et au moins une vis (16) est vissée à la bride de vis, dans laquelle la vis (16) s'engage en particulier dans un trou borgne (15) de la plaque de fond (17), ou
iii) le fond (2) est formé en plusieurs parties, dans lequel le fond (2) a une plaque de fond supérieure (17'), qui est formée d'une pluralité d'éléments de plaque de fond (18), par exemple en forme de bande, dans laquelle la plaque de fond supérieure (17') est disposée sur une plaque de fond inférieure d'une seule pièce (17), dans lequel la plaque de fond monobloc (17), et éventuellement la plaque de fond supérieure (17') formée d'une pluralité d'éléments de plaque de fond (18), est fixée au cadre (3), dans lequel au moins un élément de serrage (12) s'engage dans une bride de serrage (10) faisant saillie vers l'extérieur du cadre (3), ou
iv) le fond (2) est formé en plusieurs parties, le fond (2) étant constitué d'une plaque de fond (17') formée d'une pluralité d'éléments de plaque de fond (18), par exemple en forme de bande, la plaque de fond (17') formée d'une pluralité d'éléments de plaque de fond (18) étant fixée au cadre (3), par exemple, par au moins une bande de serrage (19), dans lequel les éléments de la plaque inférieure (18) reposent sur une bride de vis (14) du cadre (3), dans lequel la au moins une bande de serrage (19) est vissée à la bride de vis (14) par au moins une vis (16), dans lequel la au moins une vis (16) s'engage en particulier dans un trou borgne (15) de la au moins une bande de serrage (19).

2. Bac de transport (1) selon la revendication 1, dans laquelle le fond (2) est constitué d'un matériau choisi dans le groupe constitué par la cordiérite, la mullite, l'oxyde d'aluminium, l'oxyde de zirconium, l'oxyde de magnésium, le R-SiC, le N-SiC, le S-SiC et le Si-SiC, ou leurs mélanges, et dans lequel le cadre (3) est constitué d'un mélange cordiérite/spinel/mullite.

3. Bac de transport (1) selon l'une quelconque des revendications 1 ou 2, dans laquelle le cadre (3) est composé d'une pluralité de pièces individuelles.
